# EUROPÄISCHE PATENTSCHRIFT

(11) **EP 3 703 246 B1**
(45) Veröffentlichungstag und Bekanntmachung des Hinweises auf die Patenterteilung: **06.07.2022**
(21) Anmeldenummer: 20151368.6
(22) Anmeldetag: 13.01.2020
(51) Int. Cl.: H02P 21/13, H02P 21/18, H02P 29/64

(54) **VORRICHTUNG UND VERFAHREN ZUR ERFASSUNG DER WICKLUNGSTEMPERATUR**
METHOD AND DEVICE FOR CAPTURING WINDING TEMPERATURE
DISPOSITIF ET PROCÉDÉ DE DÉTECTION DE LA TEMPÉRATURE D'ENROULEMENT

(30) Priorität: 28.02.2019 DE 102019105081
(43) Veröffentlichungstag der Anmeldung: 02.09.2020
(73) Patentinhaber: ebm-papst Mulfingen GmbH & Co. KG, 74673 Mulfingen (DE)
(72) Erfinder: WYSTUP, Prof. Dr. Ralph, 74653 Künzelsau (DE); KEMMET, Philip, 74080 Heilbronn (DE)
(74) Vertreter: Staeger & Sperling Partnerschaftsgesellschaft mbB

(56) Entgegenhaltungen:
- EP-A1- 2 977 733
- DE-A1-102008 040 725
- US-A1- 2015 381 090
- Anonymous: "Kalman-Filter", Wikipedia, 23. Januar 2019 (2019-01-23), Seiten 1-10, XP055669438, Gefunden im Internet: URL:https://de.wikipedia.org/w/index.php?t itle=Kalman-Filter&oldid=184994452 [gefunden am 2020-02-18]

## Beschreibung

Die Erfindung betrifft eine Vorrichtung zur Erfassung der Wicklungstemperatur einer Motorwicklung.

Es ist allgemein bekannt, dass beim Betrieb eines Elektromotors, wie z. B. einem Gleichstrommotor im Wesentlichen die Motorwicklung erwärmt wird und deshalb bei Vollastbetrieb oder unter extremen Einsatzbedingungen die Erwärmung der Wicklung besonders beachtet werden muss. Zu diesem Zweck sind verschiedene Temperaturmesseinrichtungen bekannt geworden.

Eine Möglichkeit zur Bestimmung der Wicklungstemperatur besteht beispielsweise darin, einen Temperaturmessfühler in der Wicklung vorzusehen und damit die Temperatur der Wicklung direkt zu messen. Nachteilig bei dieser Einrichtung ist jedoch, dass die Temperatur nur an der Stelle gemessen werden kann, an der sich der Messfühler befindet. Dies bedeutet, dass örtliche Temperaturüberhöhungen in anderen Bereichen der Wicklung, oder die (gesamte) mittlere Temperatur (Temperaturverteilung) in der Wicklung, nicht gemessen werden können.

Eine weitere Möglichkeit zur Messung der Wicklungstemperatur besteht darin, den ohmschen Widerstand der Wicklung zu messen und aus diesem gemessenen Widerstandswert und einem Vergleichswert, d. h. einem Widerstandswert der Wicklung bei kaltem Motor, die Temperaturerhöhung zu bestimmen. Prinzipiell könnte die Wicklungstemperatur durch eine Messung des elektrischen Widerstands der Erregerwicklung ermittelt werden. Dies führt jedoch nur in einem stationären Betrieb einer fremderregten Synchronmaschine zu zufriedenstellenden Ergebnissen. Bei dynamischen Vorgängen werden derartige Temperaturmessungen hingegen durch Ankerrückwirkungen und Ströme in Dämpferstromkreisen so stark verzerrt, dass eine Temperaturermittlung mittels Widerstandsmessungen praktisch nicht möglich ist.

Bekannte Methoden zur Temperaturerfassung sind der Einbau von Sensoren in die Wicklung, die Bestimmung der Wicklungstemperatur über Zustandsschätzer (Kalman-Filter, Gradientenmethode) aus den Motor-Differentialgleichungen, die direkte Messung des Wicklungswiderstandes im Betrieb durch Einkopplung einer Messspannung oder die Berechnung der Motortemperatur anhand thermischer Netzwerkmodelle des Motors.

Aus der US 2015/381090 A1 ist ein Verfahren zur Ermittlung der Rotorlage und -temperatur eines Elektromotors im Stillstand oder bei niedrigen Geschwindigkeiten bekannt. Ein hochfrequentes Spannungssignal wird in das System injiziert, ein magnetischer Fluss geschätzt, daraus der elektrische Winkel und die Drehzahl abgeleitet, der Motorwiderstand geschätzt, daraus die Statortemperatur ermittelt, und schließlich über die Gegen-EMK und den magnetischen Fluss die Rotortemperatur ermittelt. Ein Kalman-Filter wird lediglich verwendet, um die Gleichungen zu aktualisieren, die zur Ermittlung des magnetischen Flusses dienen.

Aus der DE 10 2008 040 725 A1 ist ein Verfahren zur Ermittlung einer Rotortemperatur einer permanenterregten Synchronmaschine bekannt, bei dem ein Schätzwert für die Rotortemperatur mittels eines ein thermisches Modell der Synchronmaschine enthaltenden Kalman-Filters ermittelt wird.

Aus der EP 2977733 A1 ist ein weiteres Verfahren zur Ermittlung einer Wicklungstemperatur einer Erregerwicklung einer fremderregten Synchronmaschine mittels eines Kalman-Filters bekannt. Dabei wird für einen Anfangszeitpunkt ein erster Temperaturschätzwert der Wicklungstemperatur vorgegeben, zu verschiedenen auf den Anfangszeitpunkt folgenden Messzeitpunkten werden jeweils eine an der Erregerwicklung anliegende elektrische Erregerspannung (u_{f}(k)) und ein durch die Erregerwicklung fließender elektrischer Erregerstrom (i_{f}(k)) erfasst, und für jeden Messzeitpunkt wird rekursiv ein aktualisierter Temperaturschätzwert (x(k)) in Abhängigkeit von der zu dem Messzeitpunkt erfassten Erregerspannung (u_{f}(k)), dem zu dem Messzeitpunkt erfassten Erregerstrom (i_{f}(k)) und einem bisherigen Temperaturschätzwert (x(k-1)) gebildet.

Die aus der DE102008040725 A1 und der EP 2977733 A1 bekannten Lösungen verwenden dabei im Kalman-Filter das Grundschwingungsmodell und berechnen aus der Stellgröße Klemmenspannung und der Messgröße Wicklungsstrom den Wicklungswiderstand. Da es hier jedoch noch zu recht ungenauen Ergebnissen kommt und dieses Verfahren auf Basis des Grundschwingungsmodells vor allem bei größeren Motor-Bauformen schwierig ist, besteht ein Bedarf nach einer alternativen Temperaturbestimmung der Wicklung einer Drehfeldmaschine.

Der Erfindung liegt daher die Aufgabe zugrunde, vorbesagte Nachteile zu überwinden und eine optimierte und verbesserte Vorrichtung zur Ermittlung einer Wicklungstemperatur einer Wicklung einer Drehfeldmaschine anzugeben.

Die Aufgabe wird erfindungsgemäß durch die Merkmale des Anspruchs 1 gelöst.

Eine Grundidee der vorliegenden Erfindung betrifft die Ausnutzung des Skin-Effektes zur Ermittlung der Wicklungstemperatur bei hochfrequenten Strömen.

Der Skin-Effekt ist die Eigenschaft von Leitern bei Vorhandensein eines Wechselstroms, bei der nur die oberflächennahen Bereiche eines Leiters für den Transport der Ladungsträger zur Verfügung stehen. Beim Wechselstrom werden in Abhängigkeit der konkreten Frequenz entsprechende Wirbelströme und elektrische Felder erzeugt, die die Ladungsträger in die Oberfläche des Leisters verdrängen. Dabei dienen die elektrischen Felder als Träger der Energie.

Dabei verringert sich aber auch der für die Ladungsträger nutzbare Leiterquerschnitt, wobei der Wirkwiderstand des Leiters zunimmt.

Da der Widerstand selbst eine von der Temperatur abhängige Größe ist, gibt es einen unmittelbaren Zusammenhang zwischen dem Hochfrequenzwiderstand der Leitung und der Temperatur.

Erfindungsgemäß wird hierzu eine Vorrichtung zum Ermitteln der Temperatur T_{W} einer Wicklung einer mit einem Stator und einem Rotor ausgebildeten Drehfeldmaschine umfassend wenigstens ein erstes Kalman-Filter zur Bestimmung der Temperatur. Hierzu wird zunächst eine Drehfeldregelung zur Vektorregelung der Drehfeldmaschine mit wenigstens einem id-Stromregler vorgesehen, der ausgebildet ist, eine Strangspannung für die Wicklung bereit zu stellen sowie ein hochfrequentes Spannungssignal der Strangspannung aufzuprägen, um daraus einen Wicklungsstrom mit einem hochfrequent überlagertem Stromanteil für die Wicklung zu erhalten.

Dieser Strom mit dem hochfrequenten Anteil wird dem Kalman-Filter zugeführt, wobei das hierzu vorgesehene Kalman-Filter ein Modell insbesondere ein Hochfrequenzmodell des Motors besitzt, um daraus den Hochfrequenzwiderstand der Wicklung und daraus wiederum mittels einer Rechenfunktion die Wicklungstemperatur TW zu schätzen und zu ermitteln.

Das klassische Kalman-Filter ist in vielen Fällen nicht einsetzbar, da es auf lineare Zustandsraummodelle beschränkt ist. Die hier vorherrschenden Effekte sind aber nichtlinearer Natur. Somit wird gemäß der vorliegenden Erfindung ein nichtlineares Kalman-Filter verwendet. Hierzu kann auf nichtlineare Erweiterungen des Kalman-Filters wie das erweiterte Kalman-Filter (Abk. EKF) oder auch das unscented Kalman-Filter (Abk. UKF) zurückgegriffen werden. Diese Kalman-Filter-Varianten nähern das nichtlineare Problem durch ein lineares, wobei entweder analytische (EKF) oder statistische Techniken (UKF) zum Einsatz kommen. Im Sinne eines unkomplizierten Sprachgebrauchs werden diese Erweiterungen häufig abkürzend ebenfalls als Kalman-Filter bezeichnet, da sie ebenso eine rekursive sowie eine Prädiktor-Korrektor-Struktur haben. Im Gegensatz zum einfachen Kalman-Filter muss für Kalman-Matrix eine freie Variable verwendet werden und muss diese während des gesamten Filtereinsatzes jeweils mitgeschätzt werden.

In einer vorteilhaften Ausgestaltung der Erfindung ist vorgesehen, dass das hochfrequente Kalman-Filter ausgebildet ist, die spezifischen spektralen Anteile im Stromsignal auszuwerten. Hierfür können entsprechend angepasste Algorithmen zur Realisierung der entsprechenden Simulationsmodelle verwendet werden.

Die Auswertegenauigkeit lässt sich weiter verbessern, wenn der Wicklungsdraht der Wicklung eine dünne Eisenbeschichtung oder eine Beschichtung mit einem hohen Eisengehalt aufweist.

In einer bevorzugten Ausgestaltung der Erfindung ist weiter vorgesehen, dass ein zweites Kalman-Filter vorgesehen ist, welches mit einem Motorgrundmodell ausgebildet ist, um die Lage eines Rotors der Drehfeldmaschine zu schätzen bzw. zu ermitteln. In einer bevorzugten Ausgestaltung ist dabei vorgesehen, dass das zweite Kalman-Filter ausgebildet ist, um die Drehzahl des Rotors der Drehfeldmaschine zu schätzen bzw. zu ermitteln.

In einer ebenfalls vorteilhaften Ausgestaltung ist vorgesehen, dass das Hochfrequenzmodell im ersten Kalman-Filter im rotorfesten Koordinatensystem modelliert ist.

Ein weiterer Aspekt der vorliegenden Erfindung betrifft eine Drehfeldmaschine ausgebildet mit einer wie zuvor beschriebenen Vorrichtung zur Ermittlung der Wicklungstemperatur.

Ein weiterer Aspekt der vorliegenden Anmeldung betrifft ein Verfahren zur Ermittlung der Wicklungstemperatur einer Wicklung einer Drehfeldmaschine mit den folgenden Schritten:
a) Erzeugen einer Strangspannung mit einem hochfrequent überlagerten Spannungsanteil an wenigstens einer Wicklung der Drehfeldmaschine;
b) Zuführen der Strangspannung an wenigstens den Eingang des ersten Kalman-Filters (K1) und Ermitteln der Differenz zwischen dem Ist-Strangstrom und dem Soll-Strangstrom in der Wicklung basierend auf dem im Kalman-Filter (K1) hinterlegten Modell;
c) Schätzen bzw. Ermitteln des Hochfrequenzwiderstandes und
d) Ermitteln der Wicklungstemperatur aus dem Hochfrequenzwiderstand.

Besonders vorteilhaft ist es, wenn dabei das zweite Kalman-Filter aus der Differenz zwischen dem Ist-Strangstrom und dem Soll-Strangstrom in der Wicklung basierend auf dem im zweiten Kalman-Filter hinterlegten Modell die Rotorlage des Rotors und die Drehzahl der Drehfeldmaschine schätzt bzw. ermittelt.

Weiter ist mit Vorteil vorgesehen, dass die Bestimmung der Wicklungstemperatur im zuvor genannten Schritt d) mit Hilfe der Änderung des Widerstands auf Basis des Temperaturkoeffizienten des Wicklungsdrahtes der Wicklung erfolgt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt.

Es zeigt:

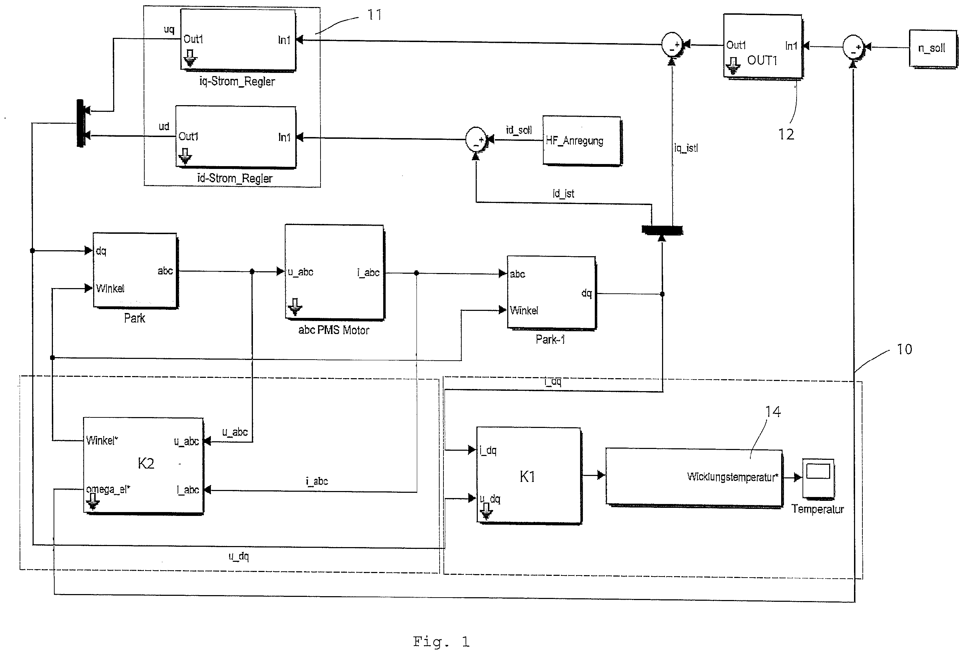

Fig. 1 eine beispielhafte Vorrichtung zur Ermittlung der Wicklungstemperatur. Im Folgenden wird die Erfindung mit Bezug auf die Figur 1 näher erläutert, wobei die Figur eine Regelungseinrichtung 1 umfassend zwei Kalman-Filter K1, K2 zeigt umfassend die erfindungsgemäße Vorrichtung 10.

Die Regelungseinrichtung 1 stellt eine Vektorreglung einer Drehfeldmaschine bereit und umfasst hierzu einen Stromregler 11 mit dem iq-Stromregler und einem id-Stromregler. Eine Stellgröße ist die Solldrehzahl n_soll, die dem Drehzahlregler 12 als Regelgröße an dessen Eingang zugeführt wird.

Am Ausgang des Stromreglers 11 bzw. dem Iq-Stromregler und dem id_Stromregler werden die Spannungsgrößen uq und ud für die Wicklung bereitgestellt.

Der erforderliche Regelungsablauf geht unmittelbar aus der Figur 1 hervor und basiert auf ansonsten bekannten Maßnahmen und Transformationen, die folglich nicht näher erläutert werden. Die d/q Transformation ist eine Grundlage zur Vektorregelung von Drehstrommaschinen und beschreibt eine von mehreren möglichen Raumzeigerdarstellungen, wie die ebenso bekannte Park und inverse Park-Transformation. Gezeigt sind ferner die zwei Park-Transformatoren Park und Park-1 zur Transformation der entsprechenden Größen zwischen Raumzeigerdarstellung und Dreiachsen (abc)-Darstellung.

Ferner dient das erste Kalman-Filter K1 als Widerstandsschätzer im HF-Modell. Hierzu werden dem Kalman-Filter K1 die Größen i_dq und u_dq in der Raumzeigerdarstellung eingangsseitig zugeführt. Auf Basis des hinterlegten HF-Modells wird der HF-Widerstand geschätzt und in einem Rechenmodul 14 zur Temperaturberechnung wird daraus die Wicklungstemperatur ermittelt und als Temperatur TW ausgegeben.

Das zweite Kalman-Filter K2 erhält als Eingangsgrößen die aus den d/q Größen mittels der Transformation erhaltenen Spannungswerte u_abc und Stromwerte i_abc als Eingangsgröße der hier exemplarisch gezeigten Werte für einen PMS-Motor als Drehfeldmaschine. Das Kalman-Filter K2 wirkt hier als Winkelschätzer zur Positionsbestimmung auf Basis eines Grundschwingungsmodells des PMS-Motors.

Am Ausgang des Kalman-Filters K2 wird der Schätzwinkel und die Drehzahl (omega_el*) ausgegeben. Letztere wird an den Drehzahlregler 12 als Stellgröße zurückgeführt. Die Positionsbestimmung wird dem Park-Transformator zugeführt.

## Patentansprüche

1. Vorrichtung (10) zum Ermitteln der Temperatur (T_{W}) einer Wicklung einer mit einem Stator und einem Rotor ausgebildeten Drehfeldmaschine umfassend wenigstens ein erstes Kalman-Filter (K1) zur Berechnung der Temperatur sowie eine Drehfeldregelung zur Vektorregelung der Drehfeldmaschine mit wenigstens einem id-Stromregler, der ausgebildet ist, der Wicklungsspannung ein hochfrequentes Spannungssignal (HF) aufzuprägen um daraus einen Wicklungsstrom mit einem hochfrequent überlagertem Stromanteil für die Wicklung zu erhalten, welcher dem Kalman-Filter (K1) zugeführt wird, wobei das Kalman-Filter (K1) ein Hochfrequenzmodell des Motors besitzt, um daraus den Hochfrequenzwiderstand der Wicklung und daraus wiederum mittels einer Rechenfunktion die Wicklungstemperatur (T_{W}) ermitteln, wobei das erste Kalman-Filter (K1) ein nichtlineares Klaman-Filter ist.

2. Vorrichtung (1) nach Anspruch 1, **dadurch gekennzeichnet, dass** das erste Kalman-Filter (K1) ausgebildet ist, die spezifischen spektralen Anteile im Stromsignal auszuwerten.

3. Vorrichtung (1) nach Anspruch 1 oder 2, **dadurch gekennzeichnet, dass** der Wicklungsdraht der Wicklung eine dünne Eisenbeschichtung oder eine Beschichtung mit einem hohen Eisengehalt aufweist.

4. Vorrichtung (1) nach einem der vorhergehenden Ansprüche, **dadurch gekennzeichnet, dass** ein zweites Kalman-Filter (K2) vorgesehen ist, welches mit einem Motormodell ausgebildet ist, um die Lage eines Rotors der Drehfeldmaschine zu schätzen bzw. zu ermitteln.

5. Vorrichtung (1) nach Anspruch 4, **dadurch gekennzeichnet, dass** das zweite Kalman-Filter (K2) ausgebildet ist, um die Drehzahl des Rotors der Drehfeldmaschine zu schätzen bzw. zu ermitteln.

6. Vorrichtung (1) nach einem der vorhergehenden Ansprüche, **dadurch gekennzeichnet, dass** das Hochfrequenzmodell im ersten Kalman-Filter (K1) im rotorfesten Koordinatensystem modelliert ist.

7. Drehfeldmaschine ausgebildet mit einer Vorrichtung gemäß einem der Ansprüche 1 bis 6.

## Claims

1. A device (10) for determining the temperature (Tw) of a winding of a rotating-field machine that is embodied with a stator and a rotor, comprising at least one first Kalman filter (K1) for calculating the temperature and one rotating-field control for vector-controlling the rotating-field machine with at least one id current controller, which is designed to impress a high-frequency voltage signal (HF) on the winding voltage in order to obtain therefrom a winding current with a high-frequency-superimposed current component for the winding, which is fed to the Kalman filter (K1), the Kalman filter (K1) having a high-frequency model of the motor for the purpose of determining the high-frequency resistance of the winding and, from that, in turn, the winding temperature (Tw) by means of a calculation function, the first Kalman filter (K1) being a nonlinear Kalman filter.

2. The device (1) as set forth in claim 1, **characterized in that** the first Kalman filter (K1) is designed to evaluate the specific spectral components in the current signal.

3. The device (1) as set forth in claim 1 or 2, **characterized in that** the winding wire of the winding has a thin iron coating or a coating with a high iron content.

4. The device (1) as set forth in one of the preceding claims, **characterized in that** a second Kalman filter (K2) is provided which is embodied with a motor model for the purpose of estimating or determining the position of a rotor of the rotating-field machine.

5. The device (1) as set forth in claim 4, **characterized in that** the second Kalman filter (K2) is designed to estimate or determine the rotational speed of the rotor of the rotating-field machine.

6. The device (1) as set forth in one of the preceding claims, **characterized in that** the high-frequency model in the first Kalman filter (K1) is modeled in the rotor-fixed coordinate system.

7. A rotating-field machine, embodied with a device as set forth in any one of claims 1 to 6.

## Revendications

1. Dispositif (10) permettant de déterminer la température (Tw) d'un enroulement d'une machine à induction réalisée avec un stator et un rotor, comprenant au moins un premier filtre de Kalman (K1) pour calculer la température ainsi qu'un régulateur de champ magnétique rotatif pour la régulation vectorielle de la machine à induction par au moins un régulateur de courant id qui est réalisé pour appliquer à la tension d'enroulement un signal de tension haute fréquence (HF) afin d'en obtenir un courant d'enroulement avec une composante de courant à superposition haute fréquence pour l'enroulement qui est amenée au filtre de Kalman (K1), le filtre de Kalman (K1) possédant un modèle haute fréquence du moteur afin d'en déterminer la résistance haute fréquence de l'enroulement et à son tour pour en déterminer la température d'enroulement (Tw) au moyen d'une fonction de calcul, le premier filtre de Kalman (K1) étant un filtre de Kalman non linéaire.

2. Dispositif (1) selon la revendication 1, **caractérisé en ce que** le premier filtre de Kalman (K1) est réalisé pour évaluer les composantes spectrales spécifiques dans le signal de courant.

3. Dispositif (1) selon la revendication 1 ou 2, **caractérisé en ce que** le fil d'enroulement de l'enroulement présente un fin revêtement de fer ou un revêtement ayant une haute teneur en fer.

4. Dispositif (1) selon l'une quelconque des revendications précédentes, **caractérisé en ce qu'**un deuxième filtre de Kalman (K2) est prévu qui est réalisé avec un modèle de moteur pour estimer ou déterminer la position d'un rotor de la machine à induction.

5. Dispositif (1) selon la revendication 4, **caractérisé en ce que** le deuxième filtre de Kalman (K2) est réalisé pour estimer ou déterminer la vitesse de rotation du rotor de la machine à induction.

6. Dispositif (1) selon l'une quelconque des revendications précédentes, **caractérisé en ce que** le modèle haute fréquence dans le premier filtre de Kalman (K1) est modélisé dans un système de coordonnées solidaire du rotor.

7. Machine à induction, réalisée avec un dispositif selon l'une quelconque des revendications 1 à 6.
